# EUROPÄISCHE PATENTSCHRIFT

(11) **EP 1 057 711 B1**
(45) Veröffentlichungstag und Bekanntmachung des Hinweises auf die Patenterteilung: **24.08.2005**
(21) Anmeldenummer: 00110919.8
(22) Anmeldetag: 24.05.2000
(51) Int. Cl.: B62D 1/18

(54) **Kraftfahrzeuglenkung**
Vehicle steering apparatus
Direction de véhicule

(30) Priorität: 01.06.1999 DE 19925208
(43) Veröffentlichungstag der Anmeldung: 06.12.2000
(73) Patentinhaber: MAN Nutzfahrzeuge Aktiengesellschaft, 80976 München (DE)
(72) Erfinder: Rieck, Gerhard, Dipl.-Ing., 81247 München (DE); Albertshofer, Günter, Dipl.-Ing., 81927 München (DE)

(56) Entgegenhaltungen:
- DE-C- 4 138 583
- US-A- 3 521 724
- US-A- 5 249 826
- PATENT ABSTRACTS OF JAPAN vol. 017, no. 580 (M-1500), 21. Oktober 1993 (1993-10-21) & JP 05 170111 A (HINO MOTORS LTD), 9. Juli 1993 (1993-07-09)

## Beschreibung

### Stand der Technik

Die Erfindung geht aus von einer Kraftfahrzeuglenkung, insbesondere von einer Nutzfahrzeuglenkung, gemäß der Gattung von Patentanspruch 1.

In der DE 41 38 583 C1 ist eine derartige verstellbare Lenksäule für Nutzfahrzeuge offenbart, welche an ihrem oberen Ende ein Lenkrad trägt. Das Lenkrad ist über die Lenksäule am Kraftfahrzeugaufbau abgestützt und nach Lösen oder Überwinden einer von einer fahrerbetätigbaren Klemmvorrichtung durch Reibschluß erzeugten Arretierung diesem gegenüber in der Höhe und Neigung stufenlos einstellbar. Die Neigungsverstellung erfolgt um eine quer zur Fahrtrichtung verlaufende Schwenkachse.

Bei einem Frontalaufprall des Kraftfahrzeuges entsteht wegen der abrupten Verzögerung der Massen der Lenksäule und des Lenkrades eine in Fahrtrichtung weisende Trägheitskraft, welche auf die Lenksäule oder das Lenkrad ein Aufstellmoment um die Schwenkachse ausübt, das unter Umständen so groß ist, daß die reibschlüssige Klemmung überwunden und demzufolge die Lenksäule nach vorne, in eine steilere Position verschwenkt wird. Da das Lenkrad in diesem Fall eine annähernd horizontale Stellung einnimmt, ergibt sich eine ungünstige Position des Fahrers relativ zum Lenkrad bzw. zu einem aus dem Lenkrad austretenden Airbag. Das Resultat kann eine hohe Brustintrusion sein, da die Brust des Fahrers am unteren Lenkradkranz anschlägt und nicht, wie geplant, insgesamt durch die als Prallplatte wirkende Lenkradfläche oder durch den Airbag abgestützt wird.

Bei Nutzfahrzeugen ist die Lenksäule bereits im Ausgangszustand relativ steil angestellt, so daß der Winkel des Fahreroberkörpers relativ zum Lenkrad beim Aufschlag schon unter der Annahme einer durch den Frontalcrash unveränderten Neigung der Lenksäule ungünstig ist. In der Regel stellt sich die Lenksäule bei einem Frontalcrash trägheitsbedingt oder durch Verformung der Frontwand jedoch noch weiter auf, so daß sich bei Nutzfahrzeugen das Problem einer besonders geringen Abstützung des Brustbereiches durch das Lenkrad bzw. durch den Lenkrad-Airbag ergibt.

Der vorliegenden Erfindung liegt demgegenüber die Aufgabe zugrunde, eine Kraftfahrzeuglenkung der eingangs erwähnten Art zu schaffen, bei welcher die Aufstellneigung der Lenksäule im Frontalkollisionsfall mit einfachen und dauerhaft wirksamen Mitteln mindestens kompensierbar ist.

Erfindungsgemäß wird diese Aufgabe durch die kennzeichnenden Merkmale von Anspruch 1 gelöst.

### Vorteile der Erfindung

Die erfindungsgemäße Kraftfahrzeuglenkung hat den Vorteil, daß deren Aufbau äußerst einfach und deshalb die hierfür anfallenden Fertigungskosten gering sind. Da die Energie zum Erzeugen des Kompensations-Drehmomentes auf die Lenksäule von der abrupten Verzögerung der Frontalkollision selbst herrührt, müssen insbesondere keine zusätzlichen Energiespeicher vorgesehen werden, deren Energiepotential ständig erneuert werden muß.

Durch die in den Unteransprüchen aufgeführten Maßnahmen sind vorteilhafte Weiterbildungen und Verbesserungen der im Patentanspruch 1 angegebenen Kraftfahrzeuglenkung möglich.

Zweckmäßigerweise stützt sich die Lenksäule über die Schwenkachse am Fahrzeugaufbau kipphebelartig ab, wobei die Schwenkachse im wesentlichen einen oberen Lenksäulenteil von einem unteren Lenksäulenteil trennt und das Lenkrad am oberen Ende des oberen Lenksäulenteiles und die Zusatzmasse am unteren Ende des unteren Lenksäulenteiles angeordnet ist.

Da bei Nutzfahrzeugen die Lenksäule bereits im Ausgangszustand eine ungünstig steile Position aufweist, welche sich durch die Aufstellneigung bei einer Kollision noch weiter verstärkt, kann es im Hinblick auf einen günstigeren Lenksäulenwinkel wünschenswert sein, die Lenksäule in Richtung auf den Fahrer zu verschwenken. Damit eine Drehung der Lenksäule gegenüber dem Fahrzeugaufbau möglich ist, muß das von der Arretierung der Lenksäule herrührende Reibmoment überwunden werden.

Gemäß einer besonders zu bevorzugenden Ausführungsform sind deshalb das Gewicht der Zusatzmasse und die Länge des zwischen der Zusatzmasse und der Schwenkachse wirksamen Hebelarmes derart gewählt, daß das sich aus diesen Größen ergebende Drehmoment größer ist als die Summe aus dem durch Trägheitskräfte des oberen Lenksäulenteiles und des Lenkrades erzeugten Aufstellmoment und dem Reibmoment der Arretierung, um eine Neigungsverstellung der Lenksäule in Richtung auf den Fahrer zu ermöglichen. Besonders vorteilhaft ist hierbei, daß die durch die Trägheitskraft der Zusatzmasse bewirkte Neigungsverstellung der Lenksäule unabhängig vom Verformungsgrad des Fahrzeugaufbaues erfolgt, so daß die insbesondere bei Nutzfahrzeugen bereits im kollisionsfreien Ausgangszustand ungünstige Winkellage der Lenksäule auch bei geringen Verformungen des Fahrzeugaufbaues korrigierbar ist

Um über die Neigungsverstellung hinaus auch eine Korrektur der axialen Position der Lenksäule im Frontalkollisionsfall zu ermöglichen, ist gemäß einer Weiterbildung eine Kulissenführung vorgesehen, welche zwecks Axialverstellung der Lenksäule winklig zur Fahrzeughochachse verlaufende Verschiebekulissen umfaßt. Da die aus der abrupten Verzögerung der an der Lenksäule angreifenden Zusatzmasse herrührende und in Fahrtrichtung weisende Trägheitskraft eine Komponente in Richtung der vom Fahrer gesehen nach schräg vorne verlaufenden Verschiebekulissen hat, kann das Lenkrad nach Überwinden der Losbrechkraft der Arretierung in die unterste Verstellposition gelangen, wodurch sich der Freiraum zwischen Lenkrad und Fahrer in vorteilhafter Weise vergrößert, so daß ein Aufprall des Fahrers auf dem Lenkrad unter Umständen völlig vermieden werden kann.

### Zeichnungen

Nachstehend ist ein Ausführungsbeispiel der Erfindung in den Zeichnungen dargestellt und in der nachfolgenden Beschreibung näher erläutert. In den Zeichnungen zeigen:
- Fig. 1: eine Seitenansicht einer Nutzfahrzeuglenkung mit einer an einem Lenksäulenunterteil angebrachten Zusatzmasse;
- Fig.2: eine Seitenansicht der Nutzfahrzeuglenkung von Fig. 1, wobei die Lenksäulenneigung durch die Trägheitskraft der Zusatzmasse verstellt ist.

### Beschreibung des Ausführungsbeispieles

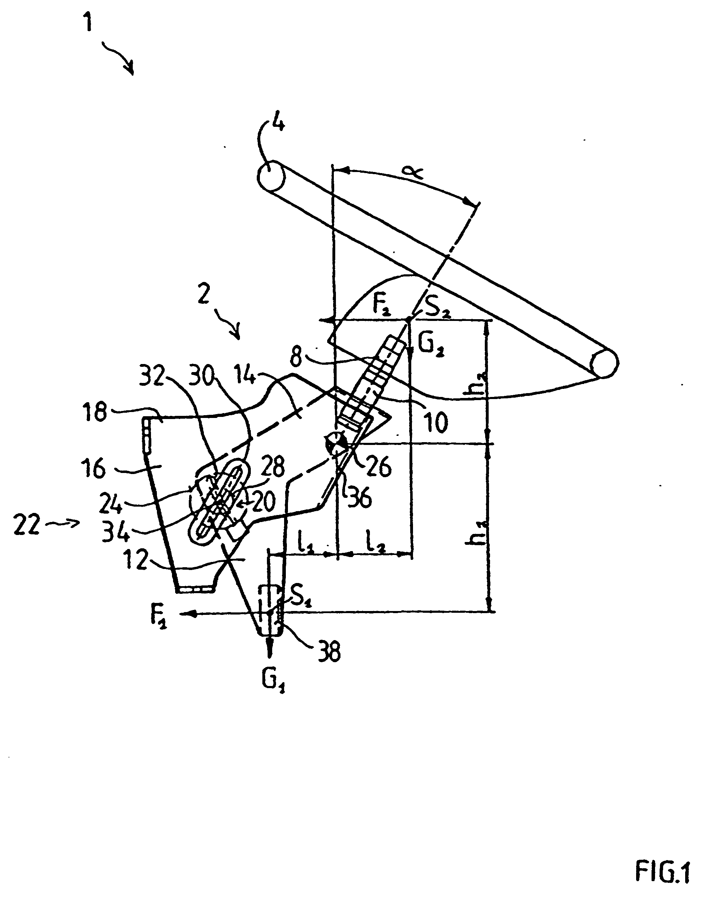

Die in Fig. 1 insgesamt mit 1 bezeichnete Fahrzeuglenkung ist gemäß einer bevorzugten Ausführungsform eine Nutzfahrzeuglenkung. Die Nutzfahrzeuglenkung 1 enthält ein am oberen Ende einer Lenksäule 2 angeordnetes Lenkrad 4.

Die Lenksäule 2 beinhaltet einen oberen Lenksäulenteil 8 mit einem Mantelrohr 10, in welchem eine mit dem Lenkrad 4 verbundene Lenkspindel drehbar aufgenommen ist, die ihrerseits mit einem nicht dargestellten Lenkgetriebe in Verbindung steht. Im kollisionsfreien Zustand nimmt der obere Lenksäulenteil 8 eine Lenksäulenneigung α relativ zur Vertikalen ein, welche bei Nutzfahrzeugen relativ gering ist und sich hieraus ein ungünstiger Aufprallwinkel des Fahrers auf dem Lenkrad ergibt

Dem oberen Lenksäulenteil 8 schließt sich ein unterer, gegenüber dem oberen Lenksäulenteil 8 stumpfwinklig vorgezogener Lenksäulenteil an, der als U-förmiges Verschiebeblech 12 ausgebildet ist. Die beiden Schenkel 14 des U-förmigen Verschiebebleches 12 sind von zwei Wangen 16 eines am Fahrzeugaufbau befestigten Lenksäulenbockes 18 umgriffen und innerhalb der Wangen 16 mittels einer Kulissenführung 20 verschieb- und schwenkbar geführt, wobei wegen der Seitenansicht gemäß Fig.1 nur jeweils ein Schenkel 14 und eine Wange 16 zu sehen sind. Die Kulissenführung 20 bildet einen Teil eines fahrerbetätigbaren Verstellmechanismus 22 der Lenksäule 2.

Darüber hinaus umfaßt die erfindungsgemäße Nutzfahrzeuglenkung 1 eine in Fig. 1 im Bereich der Kulissenführung 20 durch eine gestrichelte Kreislinie dargestellte Pneumatikzylinder-Kolben-Einheit 24 sowie hiervon beabstandet, eine Schwenkachse 26. Die Pneumatikzylinder-Kolben-Einheit 24 ist am Lenksäulenbock 18 parallel zur Schwenkachse 26 zwischen den beiden Schenkeln 14 des den unteren Lenksäulenteil bildenden U-förmigen Verschiebebleches 12 aufgenommen, wobei an den freien Enden ihres Kolbens und Zylinders Klemmbacken 28 ausgebildet sind, welche in Fig. 1 ebenfalls durch jeweils einen gestrichelten Kreisbogen angedeutet sind.

Die Pneumatikzylinder-Kolben-Einheit 24 ist fahrerbetätigt druckbeaufschlag- und druckentlastbar, wobei bei Druckbeaufschlagung durch die sich dann nach innen bewegenden Klemmbacken 28 die Schenkel 14 des U-fömigen Verschiebebleches 12 zur Aufhebung eines vorhandenen Reibschlusses von innen gegen die Wangen 16 des Lenksäulenbockes 18 entspannbar und somit eine Verschiebung und Verschwenkung der Lenksäule 2 gegenüber dem stationären Lenksäulenbock 18 im Rahmen des durch die Kulissenführung 20 gegebenen Spielraumes möglich ist.

Die Kulissenführung 20 umfaßt einerseits als gerade Ausschnitte in den Wangen 16 des Lenksäulenbockes 18 ausgebildete und sich parallel zum oberen Lenksäulenteil 8 erstreckende Verschiebekulissen 30 und andererseits als Kreisbogenausschnitte in den Schenkeln 14 des U-förmigen Verschiebebleches 12 ausgebildete und sich in Umfangsrichtung einer gedachten Kreisbahn um die Schwenkachse 26 erstreckende Schwenkkulissen 32, wobei sich die Verschiebekulissen 30 und die Schwenkkulissen 32 beidseits paarweise kreuzend überdecken und mittels von den Klemmbacken 28 der Pneumatikzylinder-Kolben-Einheit 24 achsmittig nach außen wegragenden Achsstummeln 34 gegeneinander geführt sind.

Die Schwenkachse besteht aus einer mit dem oberen Ende des U-förmigen Verschiebebleches 12 in Verbindung stehenden und quer zu diesem verlaufenden Rolle 26, deren Enden in Führungsschienen 36 in den Wangen 16 des Lenksäulenbockes 18 beidseitig geführt sind. Um eine gleichsinnige Verstellung zu ermöglichen, sind die Führungsschienen 36 parallel zur Längserstreckung der Verschiebekulissen 30 angeordnet. Über die Rolle 26, welche im wesentlichen den oberen Lenksäulenteil 8 vom unteren Lenksäulenteil 12 trennt, ist die Lenksäule 2 kipphebelartig abgestützt.

Bei Druckentlastung der Pneumatikzylinder-Kolben-Einheit 24 kann somit die Lenksäule 2 relativ zum Lenksäulenbock 18 längs der Verschiebekulissen 30 axial und zugleich um die Schwenkachse 26 in ihrer Neigung verstellt werden, wobei sie über die in den Führungsschienen 36 des Lenksäulenbockes 18 gehaltene Schwenkachse 26 abgestützt ist und die Schwenkbewegung durch die Schwenkkulissen 32 geführt wird. Die eingestellte Lage der Lenksäule 2 ist dann durch einen zwischen den Schenkeln 14 des unteren Lenksäulenteiles 12 und den Wangen 16 des Lenksäulenbockes 18 erzeugbaren Reibschluß klemmbar. Dieser Reibschluß ist durch eine zum Fahrer auslösbare Druckentlastung der Federspeicher der Pneumatik-Zylinder-Kolben-Einheit 24 erzeugt.

Am unteren Ende des unteren Lenksäulenteiles 12 ist eine Zusatzmasse 38 der Masse m₁ befestigt, durch welche im Fall einer Frontalkollision eine Trägheitskraft F₁= m₁ x a im Schwerpunkt S₁ in Richtung des in Fig.1 dargestellten Pfeiles erzeugt wird, wobei a der Verzögerung durch den Aufprall entspricht. Diese Kraft F₁ erzeugt durch den zwischen der Zusatzmasse 38 und der Schwenkachse 26 vorhandenen Hebelarm h₁ ein Drehmoment M₁ = F₁ x h₁ auf die Lenksäule 2, welches diese in Richtung auf den Fahrer zu drängt. Demgegenüber wird durch eine im gemeinsamen Schwerpunkt S₂ des Lenkrades 4 und des oberen Lenksäulenteiles 8 angreifende und durch die Trägheit der Masse m₂ des Lenkrades 4 und des oberen Lenksäulenteiles 8 bedingte Trägheitskraft F₂ = m₂ x a ein hierzu gegensinniges Aufstellmoment M₂ = F₂ x h₂ um die Schwenkachse 26 erzeugt, welches die Lenksäule 2 in eine unerwünscht steile Position drängt. Soll dieses Aufstellmoment M₂ gerade kompensiert werden, muß gelten : F₁ x h₁ = F₂ x h₂. Da Drehmomentenausgleich herrscht, findet in diesem Fall bei einem Frontalcrash keine Schwenkbewegung der Lenksäule 2 gegenüber dem Lenksäulenbock 18 aufgrund der massenbedingten Trägheitskräfte F₁ und F₂ statt.

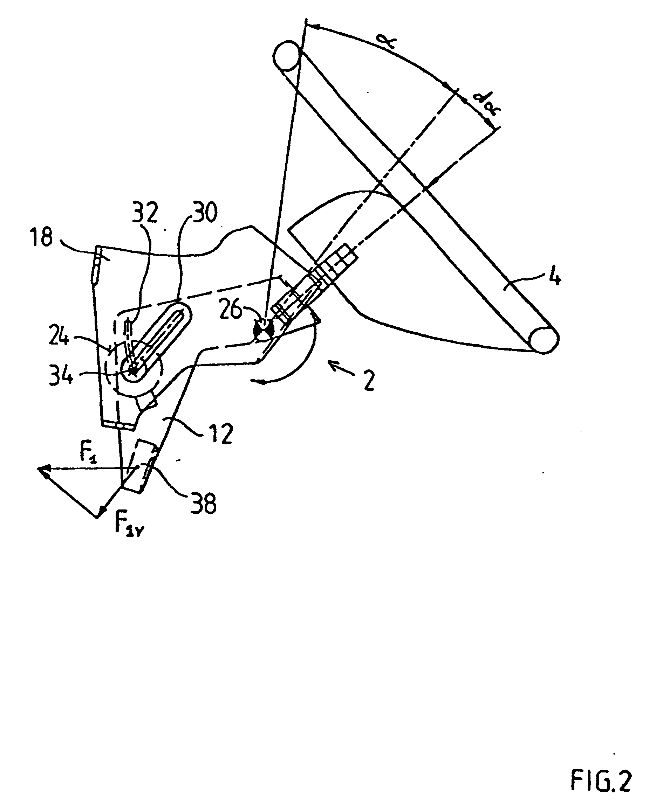

Soll hingegen die bei Nutzfahrzeugen ungünstig steile Lenksäulenposition beim Frontalcrash korrigiert werden, müssen das Gewicht der Zusatzmasse m₁ und die Hebelarmlänge h₁ gemäß der bevorzugten Ausführungsform so gewählt werden, daß das sich aus diesen Größen ergebende Drehmoment M₁ größer ist als die Summe aus dem hierzu gegensinnigen, durch die Trägheitskräfte F₂ des oberen Lenksäulenteiles und des Lenkrades erzeugten Aufstellmoment M₂ und dem Reib- oder Losreißmoment M_{R} zur Überwindung der Arretierung durch die druckbeaufschlagte Pneumatikzylinder-Kolben-Einheit 24. In einem solchen Fall ergibt sich die in Fig. 2 dargestellte Situation der Fahrzeuglenkung unmittelbar nach einer Frontalkollision.

Wie aus Fig.2 anschaulich hervorgeht, verschwenkt die Lenksäule 2 durch das durch die Trägheitskraft F₁ hervorgerufene Drehmoment M₁ dann um einen Winkel dα auf den Fahrer zu, vorzugsweise so weit, bis die unteren Enden der in den Schenkeln 14 des unteren Lenksäulenteiles 12 ausgebildeten Schwenkkulissen 32 an den Achsstummeln 34 der stationären Pneumatikzylinder-Kolben-Einheit 24 anschlagen. Damit kann die im kollisionsfreien Betrieb vorhandene sprüngliche Lenksäulenneigung α relativ zur Vertikalen vergrößert werden, um eine vorteilhafte Lenkradposition ähnlich der beim Pkw zu erhalten und um darüber hinaus eine durch die Frontalkollision eventuell hervorgerufene Verkleinerung der ursprünglichen Lenksäulenneigung α zu kompensieren.

Da die aus der abrupten Verzögerung der an der Lenksäule 2 angreifenden Zusatzmasse 38 herrührende und in Fahrtrichtung weisende Trägheitskraft F₁ eine Komponente F_{1V} in Richtung der vom Fahrer gesehen nach schräg vorne verlaufenden Verschiebekulissen 30 hat, kann die Lenksäule 2 zusammen mit dem Lenkrad 4 nach Überwinden der Losbrechkraft der Klemmung in die in Fig. 2 gezeigte unterste Verstellposition gelangen, wodurch sich der Freiraum zwischen Lenkrad 4 und Fahrer in vorteilhafter Weise vergrößert.

Damit im kollisionsfreien Betrieb nach Lösen der Arretierung mittels Druckentlastung der Pneumatikzylinder-Kolben-Einheit 24 auf eine Abstützung der dann um die Schwenkachse 26 frei drehbaren Lenksäule 2 verzichtet werden kann, gilt vorzugsweise: G₁ x I₁ = G₂ x I₂, wobei I₁ und I₂ jeweils der horizontale Abstand des Schwerpunktes S₁ bzw. der horizontale Abstand des Schwerpunktes S₂ von der Schwenkachse 26 und G₁ = m₁ x g und G₂ = m₂ x g die aus den Massen m₁ und m₂ und der Erdbeschleunigung g resultierenden Gewichtskräfte sind, wie aus Fig. 1 hervorgeht.

Sollte wegen der miteinander konkurrierenden Zielsetzungen, Kompensation der Trägheitskräfte bzw. Korrektur der Lenksäulenneigung im Frontalkollisionsfall einerseits und Gewichtsbalance der Lenksäule andererseits keine Übereinstimmung z. B. in der Wahl des Gewichtes der Masse m₁ erzielbar sein, so könnte beispielsweise eine Feder zur Abstützung der Lenksäule 2 vorgesehen werden.

## Patentansprüche

1. Kraftfahrzeuglenkung (1), insbesondere Nutzfahrzeuglenkung, mit einer ein Lenkrad (4) tragenden Lenksäule (2), wobei die Lenksäule (2) an einem Fahrzeugaufbau (18) abgestützt und nach Lösen oder Überwinden einer durch Reibschluß erzeugten Arretierung (24) diesem gegenüber um eine horizontale Schwenkachse (26) quer zur Fahrtrichtung schwenkbar ist, **dadurch gekennzeichnet, daß** sie eine mit der Lenksäule (2) in Wirkverbindung stehende Zusatzmasse (38) beinhaltet, durch welche im Frontalkollisionsfall auf die Lenksäule (2) ein durch Trägheitskräfte (F₁) bedingtes Drehmoment (M₁) um die Schwenkachse (26) ausübbar ist, durch welches ein von Trägheitskräften (F₂) der Lenksäule (2) und des Lenkrades (4) herrührendes und hierzu gegensinniges Aufstellmoment (M₂) zumindest kompensierbar ist

2. Kraftfahrzeuglenkung nach Anspruch 1, **dadurch gekennzeichnet, daß** sich die Lenksäule (2) über die Schwenkachse (26) am Fahrzeugaufbau (18) kipphebelartig abstützt, wobei die Schwenkachse (26) im wesentlichen einen oberen Lenksäulenteil (8) von einem unteren Lenksäulenteil (12) trennt und das Lenkrad (4) am oberen Ende des oberen Lenksäulenteiles (8) und die Zusatzmasse (38) am unteren Ende des unteren Lenksäulenteiles (12) angeordnet ist.

3. Kraftfahrzeuglenkung nach Anspruch 2, **dadurch gekennzeichnet, daß** das Gewicht der Zusatzmasse (38) und die Länge des zwischen der Zusatzmasse (38) und der Schwenkachse (26) wirksamen Hebelarmes (h₁) derart gewählt sind, daß das sich aus diesen Größen ergebende Drehmoment (M₁) das durch die Trägheitskräfte (F₂) des oberen Lenksäulenteiles (8) und des Lenkrades (4) erzeugte Aufstellmoment (M₂) gerade kompensiert.

4. Kraftfahrzeuglenkung nach Anspruch 2, **dadurch gekennzeichnet, daß** das Gewicht der Zusatzmasse (38) und die Länge des zwischen der Zusatzmasse (38) und der Schwenkachse (26) wirksamen Hebelarmes (h₁) derart gewählt sind, daß das sich aus diesen Größen ergebende Drehmoment (M₁) größer ist als die Summe aus dem durch Trägheitskräfte (F₂) des oberen Lenksäulenteiles (8) und des Lenkrades (4) erzeugten Aufstellmoment (M₂) und einem Reibmoment (M_{R}) der Arretierung (24), zur Neigungsverstellung der Lenksäule (2) in Richtung auf den Fahrer zu.

5. Kraftfahrzeuglenkung nach Anspruch 4, **dadurch gekennzeichnet, daß** die Arretierung eine druckluftbetätigbare Pneumatikzylinder-Kolben-Einheit (24) beinhaltet, durch welche bei fahrerbetätigter Druckbeaufschlagung zur Verminderung des Reibmomentes (M_{R}) ein Reibschluß zwischen der Lenksäule (2) und einem mit dem Fahrzeugaufbau verbundenen Lenksäulenbock (18) lösbar und eine Verschiebung und Drehung der Lenksäule (2) gegenüber dem Lenksäulenbock (18) ermöglichbar ist.

6. Kraftfahrzeuglenkung nach Anspruch 5, **dadurch gekennzeichnet, daß** sie einen fahrerbetätigbaren Verstellmechanismus (22) zur Neigungs- und Axialverstellung der Lenksäule (2) umfaßt, mit einer von der Schwenkachse (26) beabstandeten Kulissenführung (20), weiche zwecks Axialverstellung der Lenksäule (2) winklig zur Fahrzeughochachse verlaufende Verschiebekulissen (30) und zwecks Neigungsverstellung mit der Schwenkachse (26) koaxiale Schwenkkulissen (32) umfaßt, wobei die Verschiebekulissen (30) und die Schwenkkulissen (32) sich paarweise kreuzend überdecken und durch sie hindurchragende Achsen (34) gegeneinander geführt sind.

7. Kraftfahrzeuglenkung nach Anspruch 6, **dadurch gekennzeichnet, daß** mittels der Kulissenführung (20) Schenkel (14) des unteren, als U-förmiges Verschiebeblech ausgebildeten Lenksäulenteiles (12) innerhalb von Wangen (16) des Lenksäulenbockes (18) verschieb- und schwenkbar geführt und gegen diese von innen mittels der druckbeaufschlagten Pneumatikzylinder-Kolben-Einheit (24) entriegelbar sind.

8. Kraftfahrzeuglenkung nach Anspruch 7, **dadurch gekennzeichnet, daß** die Verschiebekulissen (30) als gerade Ausschnitte in den Wangen (16) des Lenksäulenbockes (18) und die Schwenkkulissen (32) als mit der Schwenkachse (26) koaxiale Kreisbogenausschnitte in den Schenkeln (14) des U-förmigen Verschiebebleches (12) ausgebildet sind.

9. Kraftfahrzeuglenkung nach Anspruch 8, **dadurch gekennzeichnet, daß** die Schwenkachse vom fahrerbetätigbaren Verstellmechanismus (20) umfaßt ist und eine Rolle (26) beinhaltet, welche mit dem oberen Ende des U-förmigen Verschiebebleches (12) in Verbindung stehend quer zu diesem verläuft und deren Enden in Führungsschienen (36) in den Wangen (16) des Lenksäulenbockes (18) beidseitig geführt sind, welche parallel zur Längserstreckung der Verschiebekulissen (30) angeordnet sind.

## Claims

1. Motor-vehicle steering system (1), particularly for a commercial vehicle, with a steering column (2) carrying a steering wheel (4), whereby the steering column (2) is supported on a vehicle superstructure (18) and after releasing or overcoming a locking mechanism (24) engaged by frictional forces can, relative to said vehicle superstructure (18), be slewed about a horizontal slewing axis (26) in transverse direction relative to the driving direction, **characterised in that** it includes an additional mass (38) which is in working connection with the steering column (2) and by means of which additional mass (38), in the event of a head-on collision, a turning moment (M1) resulting from the forces of inertia can be exerted on the steering column (2) about the slewing axis (26), by means of which turning moment (M1) a raising moment (M2) acting in opposite direction and caused by the forces of inertia (F2) of the steering column (2) and of the steering wheel (4) can at least be compensated.

2. Motor-vehicle steering system according to Claim 1, **characterised in that** the steering column (2) is supported via the slewing axis (26) on the vehicle superstructure (18) in a rocker-arm-type manner, whereby the slewing axis (26) basically separates an upper steering column part (8) from a lower steering-column part (12) and that the steering wheel (4) is arranged on the upper end of the upper steering column part (8) and the additional mass (38) on the lower end of the lower steering-column part (12).

3. Motor-vehicle steering system according to Claim 2, **characterised in that** the weight of the additional mass (38) and the length of the lever arm (h1) acting between the additional mass (38) and the slewing axis (26) are selected so that the turning moment (M1) resulting from these variables only just compensates the raising moment (M2) generated by the forces of inertia (F2) of the upper steering-column part (8) and of the steering wheel (4).

4. Motor-vehicle steering system according to Claim 2, **characterised in that** the weight of the additional mass (38) and the length of the lever arm (h1) acting between the additional mass (38) and the slewing axis (26) are selected so that the turning moment (M1) resulting from these variables and needed for adjusting the inclination of the steering column (2) in the direction of the driver is larger than the sum of the raising moment (M2) generated by the forces of inertia (F2) of the upper steering-column part (8) and of the steering wheel (4) and of a moment of friction (M_{R}) of the locking mechanism (24).

5. Motor-vehicle steering system according to Claim 4, **characterised in that** the locking mechanism contains a compressed-air-actuated pneumatic-cylinder piston unit (24), by means of which, if the driver applies pressure for reducing the moment of friction (M_{R}), a frictional engagement between the steering column (2) and a steering-column bracket (18) connected with the vehicle superstructure can be released and the steering column (2) can be shifted and turned relative to the steering-column bracket (18).

6. Motor-vehicle steering system according to Claim 5, **characterised in that** it includes a driver-actuated adjusting mechanism (22) for adjusting the inclination and axial position of the steering column (2) and is equipped with a sliding-block guide (20) which is located at a distance relative to the slewing axis (26) and comprises sliding blocks (30) which for the purpose of axially adjusting the steering column (2) are arranged at an angle relative to the vehicle's vertical axis and slewing blocks (32) coaxial with the slewing axis (26) for the purpose of inclination adjustment, whereby the sliding blocks (30) and the slewing blocks (32) overlap one another in pairs in a cross-type manner and shafts (34) passing through them are guided against one another.

7. Motor-vehicle steering system according to Claim 6, **characterised in that** by means of the sliding-block guide (20) legs (14) of the lower steering-column part (12) designed as a U-shaped sliding plate are guided within webs (16) of the steering-column bracket (18) in a shifting and slewing manner and can be disengaged in respect of these webs (16) from within by means of the pressurised pneumatic-cylinder piston unit (24).

8. Motor-vehicle steering system according to Claim 7, **characterised in that** the sliding blocks (30) are designed as straight cut-outs in the webs (16) of the steering-column bracket (18) and the slewing blocks (32) are designed as arc-type cut-outs coaxial with the slewing axis (26) and provided in the legs (14) of the U-shaped sliding plate (12).

9. Motor-vehicle steering system according to Claim 8, **characterised in that** the slewing axis is encompassed by the driver-actuated adjusting mechanism (20) and contains a roller (26) which is in contact with the upper end of the U-shaped sliding plate (12), runs in transverse direction relative to said sliding plate (12) and that the ends of said roller (26) are guided on both sides in guide rails (36) in the webs (16) of the steering-column bracket (18), which webs (16) are arranged parallel to the longitudinal extension of the sliding blocks (30).

## Revendications

1. Direction de véhicule à moteur, en particulier direction d'un véhicule industriel, composée d'une colonne de direction (2) supportant un volant (4), auquel cas la colonne de direction (2) repose sur une carrosserie du véhicule (18) et est, vis à vis de celle-ci, pivotable transversalement par rapport au sens de marche par déverrouillage ou libération d'un dispositif de blocage (24) par pression autour d'un axe de pivotement horizontale (26), **caractérisée en ce qu'**elle contient une masse supplémentaire (38) en liaison active avec la colonne de direction (2), masse par laquelle un couple (M₁) généré en fonction des forces d'inertie (F₁) peut s'exercer sur la colonne de direction (2) autour de l'axe de pivotement en cas de collision frontale, un couple permettant au moins de compenser un couple de redressement (M₂) provenant de forces d'inertie (F₂) de la colonne de direction (2) et du volant (4) et, pour cela, inverse.

2. Direction de véhicule à moteur selon la revendication 1, **caractérisée en ce que** la colonne de direction (2) s'appuie sous forme de levier basculant sur la carrosserie du véhicule (18) selon l'axe de pivotement (26), auquel cas l'axe de pivotement sépare pour l'essentiel une partie supérieure de la colonne de direction (8) d'une partie inférieure de colonne de direction et que le volant (4) est disposé à l'extrémité supérieure de la partie supérieure de la colonne de direction (8) et la masse supplémentaire (38) à l'extrémité inférieure de la partie inférieure de la colonne de direction (12).

3. Direction de véhicule à moteur selon la revendication 2, **caractérisée en ce que** le poids de la masse supplémentaire (38) et la longueur du bras de levier (h₁) efficace situé entre la masse supplémentaire (38) et l'axe de pivotement (26) sont choisis de telle manière que le couple (M₁) résultant de ces valeurs compense exactement le couple de redressement (M₂) produit par les forces d'inertie (F₂) de la partie supérieure de la colonne de direction (8) et du volant (4).

4. Direction de véhicule à moteur selon la revendication 2, **caractérisée en ce que** le poids de la masse supplémentaire (38) et la longueur du bras de levier (h₁) efficace situé entre la masse supplémentaire (38) et l'axe de pivotement (26) sont choisis de telle manière que le couple (M₁) résultant de ses valeurs soit supérieur à la somme du couple de redressement (M₂) produit par les forces d'inertie (F₂) de la partie supérieure de la colonne de direction (8) et du volant (4) et du couple de friction (M_{R}) du dispositif de blocage (24) par rapport au réglage en inclinaison de la colonne de direction vers le chauffeur.

5. Direction de véhicule à moteur selon la revendication 4, **caractérisée en ce que** le dispositif de blocage est composé d'une unité vérin pneumatique-piston (24) actionnée par air comprimé, par laquelle une pression entre la colonne de direction (2) et un support de colonne de direction (18) relié à la carrosserie du véhicule peut être dégagée lors de l'alimentation en pression actionnée par le chauffeur pour réduire le couple de friction (M_{R}), rendant possible un déplacement et une rotation de la colonne de direction (2) par rapport au support de colonne de direction (18).

6. Direction de véhicule à moteur selon la revendication 5, **caractérisée en ce qu'**elle comprend un mécanisme d'ajustage (22) actionnable par le chauffeur pour régler la colonne de direction (2) en hauteur et en inclinaison, avec un guidage à coulisse (20) placé à une certaine distance de l'axe de pivotement (26), comprenant des coulisses de déplacement (30) se déplaçant à un certain angle par rapport l'axe de giration du véhicule pour ajuster axialement la colonne de direction (2) et des coulisses de pivotement (32) coaxiales pour ajuster la colonne de direction (2) en inclinaison avec l'axe de pivotement (26), auquel cas les coulisses de déplacement (30) et les coulisses de pivotement (32) se chevauchent par croisement par paire et des axes passant à travers sont guidés les uns contre les autres par ces coulisses.

7. Direction de véhicule à moteur selon la revendication 6, **caractérisée en ce que** des fusées (14) de la partie inférieure de colonne de direction (12) formée d'une tôle de déplacement en U sont guidées de manière déplaçable et pivotable au sein de jumelles (16) du support de colonne de direction (18) et peuvent être déverrouillées contre celles-ci de l'intérieur à l'aide de l'unité vérin pneumatique-piston (24) alimentée en pression.

8. Direction de véhicule à moteur selon la revendication 7, **caractérisée en ce que** les coulisses de déplacement (30) sont formées comme des découpes droites dans les jumelles (16) du support de colonne de direction (18) et les coulisses de pivotement sont formées comme des découpes en arc de cercle coaxiales avec l'axe de pivotement (26) dans les fusées (14) de la tôle de déplacement en U (12).

9. Direction de véhicule à moteur selon la revendication 8, **caractérisée en ce que** l'axe de pivotement est entouré par le mécanisme d'ajustage (22) actionnable par le chauffeur et contient un rouleau qui se déplace verticalement par liaison, avec l'extrémité supérieure de la tôle de déplacement en U (12) transversalement à celle-ci et ses extrémités sont guidées de chaque côté dans des rails de guidage (36) dans les.jumelles (16) du support de colonne de direction (18), lesquelles sont disposées parallèlement à l'extension longitudinale des coulisses de déplacement (30).
